# DEMANDE DE BREVET EUROPEEN

(11) **EP 0 440 558 A2**
(43) Date de publication de la demande: **07.08.1991**
(21) Numéro de dépôt: 91400231.6
(22) Date de dépôt: 31.01.1991
(51) Int. Cl.: C08L 23/02, C08L 29/04, C08K 3/24, C08K 5/09, C08L 51/06, B32B 27/32, C08L 77/00

(54) **Composition à base d'un copolymère d'éthylène-acétate de vinyle saponifié contenant une solution solide d'hydrotalcite et son utilisation**

(30) Priorité: 01.02.1990 JP 23018/90
(71) Demandeur: ELF ATOCHEM S.A., F-92800 Puteaux (FR)
(72) Inventeur: Moriyama, Takamasa, Hoshigaoka, Suita (JP); Honda, Hiroyuki, Naka-gum, Kanagawa (JP); Takida, Hiroshi, Takatsuki (JP)

(57) **Abrégé**

L'invention concerne une composition à propriété barrière aux gaz comprenant :
- un copolymère éthylène-acétate de vinyle saponifié,
- une résine de polyoléfine,
- un agent compatibilisant défini dans la description, et
- une solution solide d'hydrotalcite représentée par la formule générale

[ (M²⁺)_{y1}(M²⁺)_{y2}]₁₋ₓM³⁺(OH)₂A_{x/n},mH₂O

dans laquelle M²⁺ représente au moins un métal choisi parmi Mg, Ca, Sr et Ba, M²⁺ est un métal choisi parmi Zn, Cd, Pb et Sn, M³⁺ est un métal trivalent, Aⁿ⁻ est un anion ayant pour valence n, et x, y1, y2 et m sont respectivement des nombres positifs satisfaisant aux conditions 0 < x ≦ 0,5, 0,5 < y1 < 1, y1 + y2 = 1, et 0 ≦ m < 2.

Utilisation de la composition pour la préparation de film utilisables notamment dans l'emballage.

## Description

La présente invention fournit une composition de copolymère éthylène-acétate de vinyle saponifié dont la propriété de moulage en fusion en grande série et la qualité sont remarquablement améliorées.

### Art antérieur

Les copolymères éthylène-acétate de vinyle saponifiés en général ont diverses excellentes propriétés telles qu'une propriété d'imperméabilité à l'oxygène, une résistance mécanique, etc., et trouvent donc une application dans de nombreuses utilisations comme films, feuilles, matériaux pour récipients, fibres textiles, etc.

Cependant, comme ces copolymères saponifiés sont fortement hygroscopiques, les articles façonnés basés sur ces matériaux sont désavantageux en ce qu'ils subissent une variation marquée des propriétés physiques, comme la flexibilité, en fonction des variations de l'humidité et de la température de l'atmosphère ambiante, et en particulier leur propriété d'imperméabilité à l'oxygène est tellement dépendante de l'humidité qu'ils n'empêchent pas efficacement le passage de l'oxygène dans un environnement de forte humidité.

En outre, du fait de leur mauvaise étirabilité et de leur mauvaise flexibilité, les articles façonnés à base de ce type de copolymère subissent un étirage non uniforme au cours de l'emboutissage profond ou d'autres procédés de moulage faisant intervenir un étirement, ou donnent des trous d'aiguille au cours de l'emploi après le moulage, imposant ainsi des limitations à leur utilisation comme matériaux d'emballage. Par conséquent, on mélange souvent une résine de polyoléfine avec lesdits copolymères saponifiés.

Cependant, ces mélanges de résines indiqués ci-dessus ont une propriété de production en grande série moins bonne. Lorsqu'on les utilise pour produire des films, des feuilles et des articles façonnés analogues par moulage en fusion, par exemple, lesdites compositions de mélange subissent une gélification au cours du moulage et/ou donnent, au cours du moulage, des résines dont la couleur s'altère à la chaleur ou des résines carbonisées (que l'on dit grillées), qui collent à l'intérieur de l'extrudeuse. Par conséquent, on ne peut pas effectuer le moulage en fusion en continu pendant une période de temps prolongée. Pour surmonter ce problème, on a proposé comme mesure d'utiliser en combinaison une solution solide d'hydrotalcite.

### Problèmes que doit résoudre l'invention

Les récentes innovations technologiques et les besoins de la société en articles façonnés de qualité supérieure ont mis en évidence la nécessité de mettre au point de nouvelles compositions de copolymère éthylène-acétate de vinyle saponifié bien plus améliorées que les classiques.

Plus spécifiquement, on utilise souvent les compositions de l'art antérieur sous forme de stratifiés avec une polyoléfine ou un polyester, ou une résine thermoplastique analogue. Lorsqu'on expose des stratifiés sous forme de matériaux d'emballage pour denrées alimentaires distillables, par exemple, à une atmosphère de forte humidité à haute température, ils subissent souvent une diminution de l'adhérence entre les couches, qui peut conduire à l'apparition du phénomère de décollement ou de blanchiment (nuageage). Il y a une forte demande pour la mise au point de compositions améliorées.

### Moyens de résoudre les problèmes

Les inventeurs de la présente invention ont fait des recherches intensives dans le but de mettre au point une composition de copolymère éthylène-acétate de vinyle saponifié ayant une excellente propriété de production en grande série et garantissant des caractéristiques de qualité supérieures par rapport aux compositions classiques, par exemple une amélioration marquée de l'adhérence entre les couches, entre autres, même dans une atmosphère de forte humidité à haute température, avec maintien à haut niveau de la propriété d'imperméabilité à l'oxygène intrinsèque au copolymère saponifié. A l'issue de ces recherches, ils ont découvert que l'on peut atteindre les buts indiqués ci-dessus au moyen d'une composition de résine qui comprend
(A) un copolymère éthylène-acétate de vinyle saponifié,
(B) une résine de polyoléfine,
(C) un polymère greffé obtenu par greffage d'un acide carboxylique à insaturation éthylénique ou d'un de ses dérivés sur une résine de polyoléfine et par réaction du composé d'addition avec un oligomère de polyamide, et
(D) une solution solide d'hydrotalcite représentée par la formule générale
${\text{[(M²⁺)}}_{\text{y1}} {\text{(M²⁺)}}_{\text{y2}} {\text{]}}_{\text{1-x}} {\text{M³⁺(OH)₂A}}_{\text{x/n}} \text{,mH₂O}$ dans laquelle M²⁺ représente au moins un métal choisi parmi Mg, Ca, Sr et Ba, M²⁺ est un métal choisi parmi Zn, Cd, Pb et Sn, M³⁺ est un métal trivalent, Aⁿ⁻ est un anion ayant pour valence n, et x, y1, y2 et m sont respectivement des nombres positifs satisfaisant aux conditions 0 < x ≦ 0,5, 0,5 < y1 < 1, y1 + y2 = 1, et 0 ≦ m < 2. La présente invention a été réalisée sur la base de la découverte ci-dessus.

La présente invention va être décrite plus en détail dans la suite, l'accent étant mis sur ces compositions et en particulier sur les utilisations des articles façonnés à base de celles-ci.

Le copolymère éthylène-acétate de vinyle saponifié (A) à employer selon la présente invention doit avoir une teneur en éthylène de 20 à 60% en moles, de préférence de 25 à 55% en moles, le degré de saponification de son composant acétate de vinyle n'étant pas inférieur à 95% en moles.

Avec une teneur en éthylène inférieure à 20% en moles, la propriété d'imperméabilité à l'oxygène dans des conditions de forte humidité n'est pas aussi élevée qu'on le souhaiterait, tandis qu'une teneur en éthylène dépassant 60% en moles conduit à des baisses de la propriété d'imperméabilité à l'oxygène, de l'aptitude à l'impression et d'autres propriétés physiques. Lorsque le degré de saponification ou d'hydrolyse est inférieur à 95% en moles, la propriété d'imperméabilité à l'oxygène et la résistance à l'humidité sont sacrifiées.

Il est entendu que ce copolymère saponifié peut contenir de faibles proportions d'autres ingrédients comonomères, y compris des α-oléfines comme le propylène, l'isobutène, l'α-octène, l'α-dodécène, l'α-octadécène, etc., des acides carboxyliques insaturés ou leurs sels, des esters alkyliques partiels, des esters alkyliques complets, des nitriles, des amides et des anhydrides, et des acides sulfoniques insaturés ou leurs sels.

En ce qui concerne le composant (A) ci-dessus, son indice de fluidité à chaud (désigné dans la suite en abrégé par IFC), M₁, déterminé à 210°C et sous une charge de 2160 g, selon JIS K-6760, est avantageusement dans l'intervalle de 0,5 à 100 g/10 minutes, et de préférence de 1 à 60 g/10 minutes.

En ce qui concerne la résine de polyoléfine (B), on peut citer un polyéthylène linéaire basse densité, les polyéthylènes basse densité, moyenne densité et haute densité, les ionomères, un copolymère éthylène-propylène, un polypropylène cristallin, un polybutène, un copolymère éthylène-acétate de vinyle de teneur en acétate de vinyle relativement faible, etc. En particulier, un polyéthylène basse densité, moyenne densité ou haute densité et un polypropylène isotactique présentent une importance pratique.

En ce qui concerne (B), il est avantageux que son indice de fluidité à chaud, déterminé à 210°C et sous une charge de 2160 g, selon JIS K-6760, soit dans l'intervalle de 0,01 à 100 g/10 minutes.

Pour améliorer la compatibilité entre les composants de la composition de résine recherchée, l'incorporation de (C) est essentielle à la mise en oeuvre de l'invention.

Le composant (C) est un polymère greffé que l'on obtient en greffant un acide carboxylique à insaturation éthylénique ou un de ses dérivés à une résine de polyoléfine et en faisant réagir cet acide carboxylique ou dérivé avec un oligomère de polyamide.

On peut produire ce polymère greffé en dissolvant ou en mettant en suspension une résine de polyoléfine dans un solvant approprié ou en le mettant à l'état fondu, en activant la chaîne de résine de polyoléfine avec un initiateur de type peroxyde ou diazoïque, en y greffant un acide carboxylique à insaturation éthylénique ou un de ses dérivés pour obtenir un polymère et en mélangeant ce polymère avec un oligomère de polyamide à l'état fondu.

Pour cette réaction, on emploie une machine de Brabender, un malaxeur de Buss, une extrudeuse monovis, une extrudeuse bivis de Werner et Pfleiderer ou analogue.

Le degré de polymérisation de la résine de polyoléfine à employer est d'environ 350 à 45 000, et de préférence d'environ 500 à 10 000. L'indice de fluidité à chaud (230°C; charge 2160 g; même chose dans la suite) est d'environ 0,1 à 50 g/10 minutes pour toutes les utilisations pratiques.

Le rapport réactionnel de la résine de polyoléfine à l'acide carboxylique à insaturation éthylénique ou son dérivé est de 100/0,05 à 100/10, et de préférence de 100/0,5 à 100/3, exprimé sur une base pondérale.

Si le rapport est de 100/moins de 0,05, l'effet améliorant sur la compatibilité n'est pas suffisant. D'autre part, si le rapport est de 100/plus de 10, la viscosité est trop élevée pour un moulage pratique.

Le degré de polymérisation dudit oligomère de polyamide est de 5 à 80, de préférence d'environ 15 à 55, pour toutes les utilisations pratiques, et le rapport réactionnel est de 0,01 à 1 mole, et de préférence de 0,05 à 0,9 mole, par mole du groupe carboxyle.

Comme exemples de la résine de polyoléfine, on peut citer un polyéthylène linéaire basse densité, un polyéthylène basse densité, moyenne densité ou haute densité, des ionomères, un copolymère éthylène-propylène, un polypropylène cristallin, un polybutène, un copolymère éthylène-acétate de vinyle, un copolymère éthylène-propylène, etc. Ceux qui sont importants pour les applications pratiques sont un polyéthylène linéaire basse densité, un polyéthylène basse densité, un polyéthylène haute densité, un copolymère éthylène-propylène, un copolymère éthylène-acétate de vinyle et un polypropylène cristallin.

L'acide carboxylique à insaturation éthylénique ou son dérivé à greffer à ce polymère principal englobe, entre autres, les acides carboxyliques insaturés comme l'acide acrylique, l'acide méthacrylique, l'acide crotonique, l'acide maléique, l'acide fumarique et l'acide itaconique, et les anhydrides ou semi-esters correspondants.

L'oligomère de polyamide peut être préparé par des procédés connus comme la polymérisation d'addition d'un lactame, la polycondensation d'un acide aminocarboxylique, la polycondensation d'une diamine avec un acide dicarboxylique, etc.

Des exemples des produits de départ pour ledit oligomère de polyamide sont divers lactames comme l'ε-caprolactame, l'énantholactame, le caprylolactame, le laurolactame, l'α-pyrrolidone, l'α-pipéridone, etc., les ω-aminoacides comme l'acide 6-aminocaproïque, l'acide 7-aminoheptanoïque, l'acide 9-aminononanoïque, l'acide 11-aminoundécanoïque, etc., les diacides comme l'acide adipique, l'acide glutarique, l'acide pimellique, l'acide subérique, l'acide azélaïque, l'acide sébacique, l'acide undécadioïque, l'acide dodécadioïque, l'acide hexadécadioïque, l'acide hexadécènedioïque, l'acide éicosadioïque, l'acide éicosadiènedioïque, l'acide diglycolique, l'acide 2,2,4-triméthyladipique, l'acide xylylènedicarboxylique, l'acide 1,4-cyclohexanedicarboxylique, l'acide téréphtalique, l'acide isophtalique, etc., et les diamines comme l'hexaméthylènediamine, la tétraméthylènediamine, la nonaméthylènediamine, l'undécaméthylènediamine, la dodécaméthylènediamine, la 2,2,4- (ou 2,4,4-)triméthylhexaméthylènediamine, le bis(4,4′-aminocyclohexyl)méthane, la métaxylylènediamine, etc. Pour la régulation de la masse moléculaire, on peut aussi utiliser une monoamine comme la laurylamine ou l'oléylamine en une quantité appropriée.

Dans la composition de la présente invention, la proportion de (A) doit être de 50 à 99,5% en poids et de préférence de 60 à 95% en poids, celle de (B) doit être de 0,4 à 50% en poids et de préférence de 4,5 à 35% en poids, et celle de (C) doit être de 0,1 à 15% en poids et de préférence de 1,5 à 10% en poids.

Lorsque la proportion de (A) est inférieure à 50% en poids ou que celle de (B) est supérieure à 50% en poids, cela a une incidence défavorable sur la propriété d'imperméabilité à l'oxygène. Inversement, lorsque la proportion de (A) est supérieure à 99,5% en poids ou que celle de (B) est inférieure à 0,4% en poids, l'étirabilité et la flexibilité sont sacrifiées. Lorsque la proportion de (C) est inférieure à 0,1% en poids, la compatibilité entre (A) et (B) est faible, ce qui fait que l'adhérence entre les couches des stratifiés diminue. Inversement, lorsque la proportion de (C) dépasse 15% en poids, cela a une incidence défavorable sur la moulabilité en grande série.

Le composant (D) à employer selon la présente invention est une solution solide d'hydrotalcite représentée par la formule générale${\text{[(M²⁺)}}_{\text{y1}} {\text{(M²⁺)}}_{\text{y2}} {\text{]}}_{\text{1-x}} {\text{M³⁺(OH)₂A}}_{\text{x/n}} \text{,mH₂O}$ dans laquelle M²⁺ représente au moins un métal choisi parmi Mg, Ca, Sr et Ba, M²⁺ est un métal choisi parmi Zn, Cd, Pb et Sn, M³⁺ est un métal trivalent, Aⁿ⁻ est un anion ayant pour valence n, et x, y1, y2 et m sont respectivement des nombres positifs satisfaisant aux conditions 0 < x ≦ 0,5, 0,5 < y1 < 1, y1 + y2 = 1, et 0 ≦ m < 2.

En ce qui concerne la formule générale ci-dessus, M²⁺ est de préférence Mg ou Ca et M²⁺ est avantageusement Zn ou Cd. M³⁺ englobe, entre autres exemples, Al, Bi, In, Sb, B, Ga et Ti. Parmi eux, Al convient pour être utilisé dans la pratique.

Comme Aⁿ⁻ utiles figurent CO₃²⁻, OH⁻, HCO₃⁻, l'ion salicylate, l'ion citrate, l'ion tartrate, NO₃⁻; I⁻, l'ion oxalate, [Fe(CN)₆]⁴⁻, ClO₄⁻, CH₃COO⁻, l'ion maléate et analogues.

La solution solide d'hydrotalcite peut être traitée en surface avec un acide gras supérieur, un tensioactif anionique, un agent de pontage silane, un agent de pontage titanate, un ester d'acide gras de glycérine ou analogue.

Des exemples typiques de (D) sont les suivants : 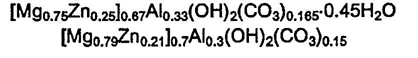 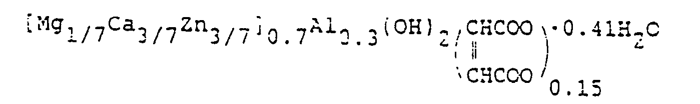 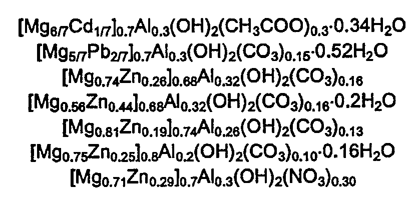 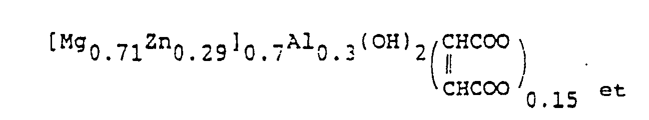 ${\text{[Mg}}_{\text{0.14}} {\text{Ca}}_{\text{0.57}} {\text{Zn}}_{\text{0.29}} {\text{]}}_{\text{0.7}} {\text{Al}}_{\text{0.3}} {\text{(OH)}}_{\text{2.3}} \text{·0.25H₂O}$

Le composant (D) est utilisé en une quantité de 0,005 à 5 parties en poids, de préférence 0,01 à 1 partie en poids, pour 100 parties en poids de la somme totale de (A) plus (B) plus (C).

Lorsque la quantité de (D) est inférieure à 0,005 partie en poids, la moulabilité en grande série est faible, tandis que les films ont moins de transparence, d'étirabilité et de flexibilité lorsque ladite quantité dépasse 5 parties en poids.

Le composant (D) peut être présent sous toute forme dans le mélange de (A), (B) et (C). Le moment de l'addition de (D) n'est pas déterminant. Il est toutefois avantageux de mélanger (D) avec la résine de polyoléfine (B) à l'avance et de mélanger ensuite le mélange maître avec les composants (A) et (C).

Alors que la composition selon la présente invention est utile pour une variété d'applications comme des articles façonnés, des adhésifs, des revêtements, etc., elle est particulièrement utile dans des applications de moulage et peut être moulée en pastilles, films, feuilles, récipients, fibres, barreaux, tuyaux et autres articles façonnés, par la technique du pétrissage en fusion. Ces produits peuvent être broyés (pour être régénérés) ou mis en pastilles pour un nouveau moulage en fusion.

Pour le moulage en fusion de la composition, le moulage par extrusion (par exemple l'extrusion en filière en T, le moulage par gonflement, le moulage par soufflage, le filage en fusion ou l'extrusion-profilage) et le moulage par injection sont principalement employés. La température de moulage en fusion est choisie dans de nombreux cas dans l'intervalle de 170 à 270°C. En plus des techniques ci-dessus, on peut aussi employer des techniques de moulage à deux couleurs et de moulage par injection-soufflage et on peut fabriquer des articles façonnés ayant de bonnes tolérances dimensionnelles.

Dans le procédé de moulage, il est bien sûr possible d'utiliser deux ou plus de deux copolymères éthylène-acétate de vinyle saponifiés de teneurs en éthylène et/ou de degré de saponification différents, en combinaison. Dans le moulage en fusion, il est aussi possible d'incorporer, en plus du copolymère éthylène-acétate de vinyle précité, des quantités convenables d'additifs comme un plastifiant (par exemple un polyalcool), un stabilisant, un tensioactif, un agent de réticulation (par exemple un composé époxydé, un sel de métal polyvalent, un polyacide minéral ou organique ou un de ses sels), une charge, un colorant, une fibre de renforcement (par exemple une fibre de verre, une fibre de carbone, etc.), etc. On peut aussi incorporer n'importe quelle autre résine thermoplastique. Une telle résine thermoplastique englobe, entre autres, des polyoléfines autres que le composant (B) cité ci-dessus (polyéthylène linéaire basse densité, polyéthylène basse densité ou haute densité, polypropylène, copolymère éthylène-propylène, copolymères éthylène-propylène-diène, copolymères d'éthylène avec une α-oléfine contenant 4 ou plus de 4 atomes de carbone, copolymère éthylène-acétate de vinyle, copolymères éthylène-ester acrylate, ionomères, polybutène, polypentène, etc.), des polyoléfines modifiées que l'on obtient par modification par greffage de ces polyoléfines avec des acides carboxyliques insaturés ou des dérivés de ceux-ci, des polyamides, du poly(chlorure de vinyle), du poly(chlorure de vinylidène), des polyesters, du polystyrène, du polyacrylonitrile, des polyuréthanes, du polyacétal, des polycarbonates, une résine de poly(alcool vinylique) moulable à chaud, etc.

Comme on l'a indiqué ci-dessus, la composition de la présente invention n'est pas seulement utilisée pour la fabrication d'un article à une seule couche essentiellement composé de la composition, mais est aussi souvent utilisée comme article stratifié contenant au moins une couche de la composition.

La couche de la composition de la présente invention présente une affinité de liaison élevée caractéristique pour le matériau de couche à stratifier avec celle-ci. En particulier, ladite affinité de liaison peut être conservée à un degré élevé même dans des conditions de forte humidité à haute température dans des cornus de distillation et analogues.

Dans la fabrication d'un produit stratifié selon l'invention, dans lequel un matériau différent est stratifié sur un côté ou sur les deux côtés d'une couche de la composition de l'invention, on peut, par exemple, employer les procédés de stratification suivants. On peut ainsi mentionner le procédé qui comprend l'extrusion en fusion d'une résine thermoplastique sur un film ou une feuille de la composition de l'invention, le procédé qui comprend l'extrusion en fusion de la composition de l'invention sur un substrat fait d'une résine thermoplastique ou d'un autre matériau quelconque, le procédé qui comprend la co-extrusion de la composition de l'invention et d'une résine thermoplastique différente, et le procédé dans lequel un film ou une feuille de la composition de l'invention est stratifié sur un film ou une feuille d'un matériau différent avec un adhésif connu tel qu'un composé d'organotitane, un composé isocyanate ou un composé polyester.

Comme résines de combinaison pour la co-extrusion, on peut mentionner un polyéthylène linéaire basse densité, un polyéthylène basse densité, un polyéthylène moyenne densité, un polyéthylène haute densité, un copolymère éthylène-acétate de vinyle, des ionomères, des copolymères éthylène-α-oléfine (α-oléfine en C₃-C₂₀), des copolymères éthylène-ester acrylique, un polypropylène, des copolymères propylène-α-oléfine (α-oléfine en C₄-C₂₀), des homo- ou copolymères d'oléfines comme le polybutène, le polypentène, etc., et des résines de polyoléfine au sens large que l'on obtient en modifiant ces homopolymères ou copolymères d'oléfines par greffage d'un acide carboxylique insaturé ou d'un ester de celui-ci, des polyesters, des polyamides, des polyamides copolymérisés, un poly(chlorure de vinyle), un poly(chlorure de vinylidène), des résines acryliques, des résines styréniques, une résine d'ester vinylique, des élastomères de polyester, des élastomères de polyuréthane, un polyéthylène chloré, un polypropylène chloré, etc. Un copolymère éthylène-acétate de vinyle saponifié peut aussi être co-extrudé.

Lorsqu'on prépare un film ou une feuille ou un article façonné analogue à partir de la composition de l'invention, puis qu'on le revêt par extrusion d'un matériau différent ou qu'on le stratifie sur un film ou une feuille d'un matériau différent avec un adhésif, ledit matériau différent n'est pas limité auxdites résines thermoplastiques, mais peut être pratiquement n'importe quel autre matériau (comme le papier, une feuille métallique, un film ou une feuille de matière plastique orienté uniaxialement ou biaxialement, un tissu tissé, un tissu non tissé, un filament métallique, du bois, etc.).

La structure stratifiée dudit produit stratifié est une question de choix. Ainsi, une couche de la composition de l'invention étant appelée A (A₁, A₂,...) et une couche d'un matériau différent, par exemple une résine thermoplastique, étant appelée B (B₁, B₂,...), on peut employer pour un film, une feuille ou une bouteille, par exemple, non seulement une structure à deux couches de A/B, mais aussi une variété d'autres combinaisons comme B/A/B, A/B/A/, A₁/A₂/B, A/B₁/B₂, B/A/B, B₂/B₁/A/B₁/B₂, etc. Dans le cas d'un filament, on peut adopter un type bimétal, âme (A) - gaine (B), âme (B) - gaine (A), âme-gaine excentrés et d'autres combinaisons de A et de B.

Pour la co-extrusion, on peut mélanger A à B ou vice versa ou bien, pour améliorer l'adhérence entre les couches, on peut incorporer une résine convenable au moins dans l'un de A et B.

Le produit stratifié peut être éventuellement configuré. Ainsi, on peut citer un film, une feuille, un ruban, une bouteille, un tuyau, un filament ou un extrudat à section droite modifiée.

Le produit stratifié peut, éventuellement, être soumis ensuite à une variété de traitements, comme un traitement thermique, un refroidissement, un laminage, une impression, une stratification à sec, un revêtement en solution ou en fusion, la production de sacs, l'emboutissage profond, la fabrication de boîtes, la fabrication de tubes, un dédoublement, etc.

Les articles façonnés et les produits stratifiés précités, en particulier sous forme de films ou de feuilles, peuvent avoir des propriétés physiques améliorées par étirage ou traction, le cas échéant.

Dans la présente invention, la composition est moulée en fusion en un matériau en film. L'épaisseur de ce film est pratiquement une question de choix et peut s'échelonner de quelques microns à plusieurs centaines de microns. Le terme "film" utilisé dans cette description signifie un film au sens large du terme, incluant ainsi une feuille, un ruban, un tube, un récipient, etc.

Le film obtenu de la manière ci-dessus est conditionné pour l'absorption de l'humidité ou le séchage, éventuellement, puis étiré.

Cet étirage peut être uniaxial ou biaxial. Les effets de l'invention sont mieux matérialisés lorsque le taux d'étirage ou traction est aussi élevé que possible. Dans le cas d'un étirage uniaxial, le taux d'étirage est de préférence d'au moins 1,5 fois et, pour de meilleurs résultats encore, non inférieur à 2 fois. Dans le cas d'un étirage biaxial, le taux d'étirage n'est de préférence pas inférieur à 1,5 fois, mieux encore pas inférieur à 2 fois et, pour des résultats encore meilleurs, pas inférieur à 4 fois, sur une base surfacique.

Quant à la technique d'étirage que l'on peut employer, on peut citer les procédés d'étirage au cylindre, d'étirage à la rame, d'étirage tubulaire et d'étirage-soufflage, ainsi que l'emboutissage profond à forte traction ou le moulage sous vide. Dans le cas d'uné tirage biaxial, on peut adopter ou bien l'étirage biaxial simultané, ou bien l'étirage biaxial en deux temps.

La température d'étirage est choisie dans l'intervalle d'environ 40 à 150°C.

A la fin de l'étirage, le produit est durci thermiquement. Ce durcissement thermique peut être réalisé par la technique bien connue. Ainsi, le film étiré étant maintenu dans un état raidi, il est traité thermiquement à une température de 50 à 160°C, de préférence de 80 à 160°C, pendant environ 2 à 600 secondes.

Le film orienté résultant peut être soumis à une variété de traitements tels que refroidissement, laminage, impression, stratification à sec, revêtement en solution ou en fusion, fabrication de sacs, emboutissage profond, fabrication de boîtes, fabrication de tubes, dédoublement, etc.

Le film, la feuille ou le récipient que l'on obtient à partir de la composition de la présente invention est utile pour emballer les denrées alimentaires, les produits pharmaceutiques, les produits chimiques industriels, les produits agrochimiques, etc.

### Effets

La composition selon l'invention, qui comprend (A), (B), (C) et (D), a une propriété de production en grande série excellente et les articles façonnés que l'on obtient à partir de celle-ci sont caractérisés par une bien meilleure adhérence entre les couches, une propriété d'imperméabilité à l'oxygène nettement améliorée et une étirabilité et une flexibilité nettement améliorées.

### Exemples

Les exemples suivants constituent une autre illustration de la composition de la présente invention. Dans la description qui suit, toutes les parties et tous les % sont en poids, sauf indication contraire.

### Copolymère éthylène-acétate de vinyle saponifié

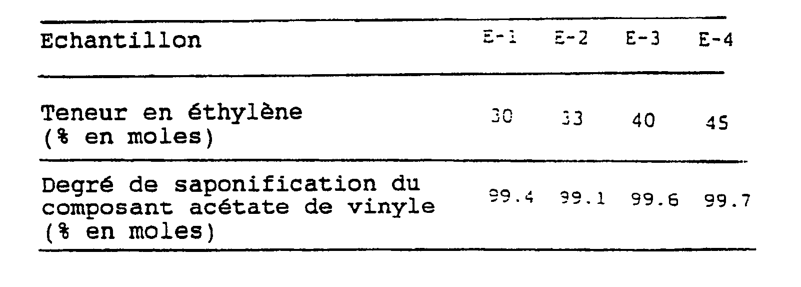

### Résine de polyoléfine

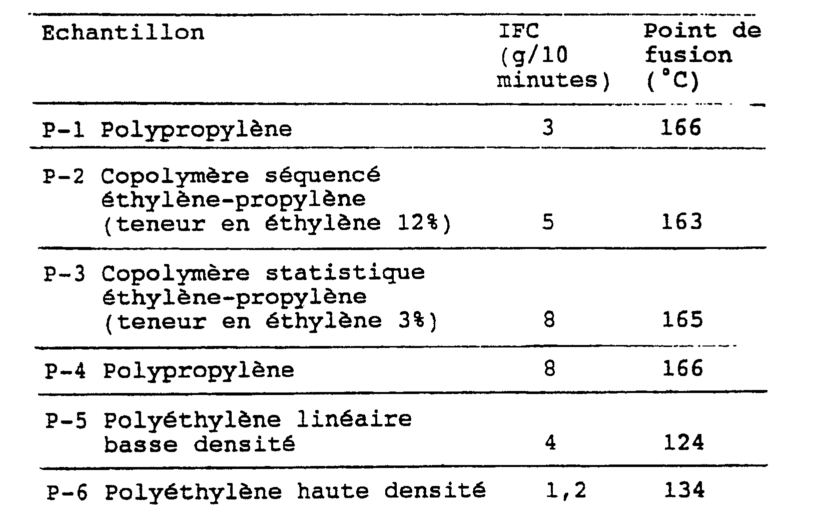

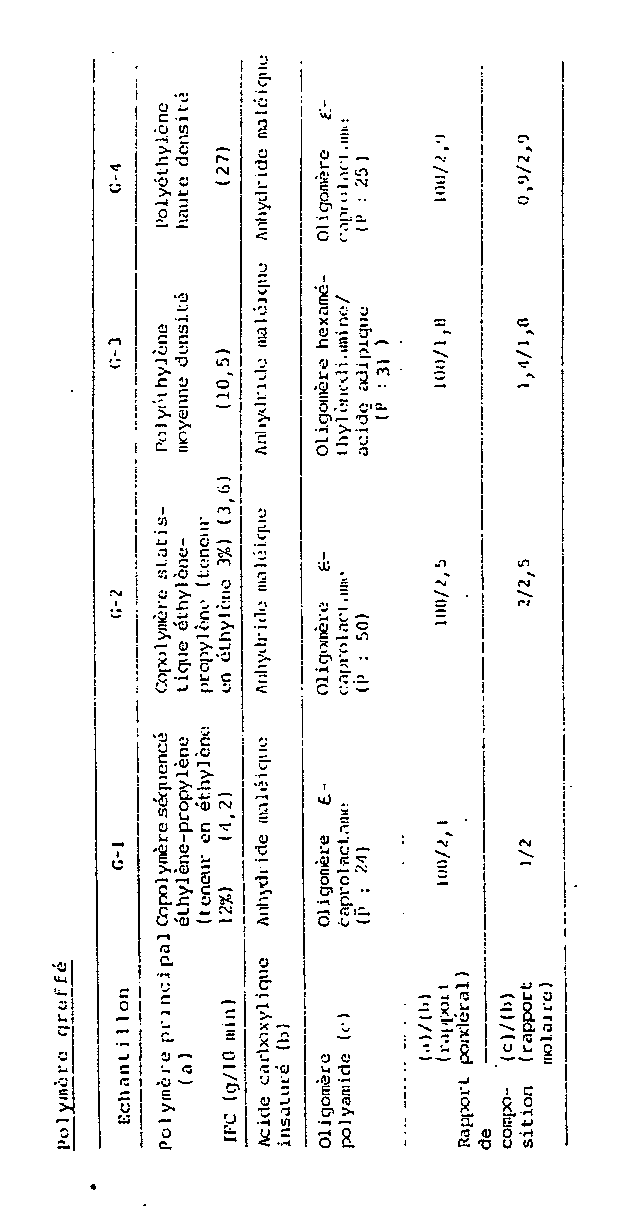

### Solution solide d'hydrotalcite

H-1 : [Mg_{0.75}Zn_{0.25}]_{0.67}Al_{0.33}(OH)₂(CO₃)_{0.165}·0.45H₂O
H-2 : [Mg_{6/7}Cd_{1/7}]_{0.7}Al_{0.3}(OH)₂(CH₃COO)_{0.3}·0.34H₂O 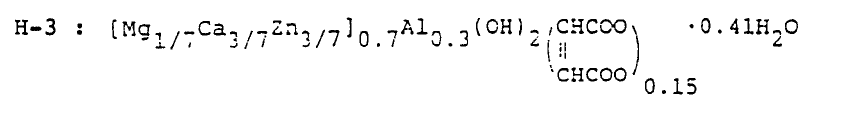
H-4 : [Mg_{5/7}Pb_{2/7}]_{0.7}Al_{0.3}(OH)₂(CO₃)_{0.15}·0.52H₂O

### Exemples 1 à 10 et exemples comparatifs 1 et 2

On produit des stratifiés ayant la construction indiquée ci-dessous en utilisant les compositions comprenant une combinaison de (A), (B), (C) et (D) indiquée sur le tableau 1.
Couche extérieure (I) : Polyamide 6
Couche intermédiaire (II) : Composition selon l'invention comprenant (A), (B), (C) et (D)
Couche adhésive (III) : Copolymère éthylène modifié par l'anhydride maléique-acétate de vinyle [IFC : 2,1 g/10 min (190°C, 2160 g)]
Couche intérieure (IV) : copolymère éthylène-acétate de vinyle ayant une teneur en acétate de vinyle de 10% [IFC : 2 g/10 min (190°C, 2160 g)].

Stratifiés à quatre couches ayant des épaisseurs de couches de (I)/(II)/(III)/(IV) = 20/10/5/20 microns. Dans l'essai d'étirage, on utilise des films d'épaisseurs de couches 80/40/20/80 microns.

### Conditions de moulage par extrusion

### Extrudeuse :

Extrudeuse de diamètre 40 mm (pour la couche intérieure)

Extrudeuse de diamètre 40 mm (pour la couche intermédiaire)

Extrudeuse de diamètre 30 mm (pour la couche adhésive)

Extrudeuse de diamètre 40 mm (pour la couche extérieure)
Vis : pour chacune L/D = 2,8; taux de compression = 3,2

### Vitesse de rotation de la vis :

Pour la couche intérieure : 40 tours/min

Pour la couche intermédiaire : 20 tours/min

Pour la couche adhésive : 20 tours/min

Pour la couche extérieure : 40 tours/min

### Filière :

Filière en T avec adaptateur de combinaison de 4 couches

Largeur de la filière : 450 mm

### Température d'extrusion :

Extrudeuses pour couches intérieure, extérieure et adhésive
C₁ = 190°C C₂ = 200°C
C₃ = 210°C C₄ = 220°C

Extrudeuse pour couche intermédiaire
C₁ = 180°C C₂ = 200°C
C₃ = 220°C C₄ = 220°C

Adaptateur de combinaison 210°C

Filière en T 210°C

Les résultats obtenus sont présentés sur le tableau 1.

L'adhérence a été mesurée après un traitement de distillation à la cornu (120°C x 30 minutes).

La propriété de production en grande série a étéé valuée au bout de 96 heures de moulage par extrusion continu, suivi du démontage de l'extrudeuse, en termes d'état d'adhérence du gel sur la maille, notée sur uneé chelle à 5 points de 1 (pas d'adhérence) à 5 (adhérence sur la totalité de la surface) ou d'état d'adhérence d'une matière brûlée ou grillée sur la surface de la vis, notée sur une échelle à 5 points de 1 (pas d'adhérence) à 5 (adhérence sur la totalité de la surface).

La perméabilité à l'oxygène a été déterminée avec un MOCON Oxtran 10/50. L'étirabilité a été évaluée en termes d'étirage non uniforme dans un étirement biaxial simultané (3 x 3 fois) à 90°C.

La résistance au choc du film a été déterminée au moyen d'un appareil de mesure de la résistance au choc des films (diamètre de la tête d'impact 3/2 pouces, 20°C x 65% HR).

La résistance à la fatigue en flexion a été évaluée en termes du nombre de pliages jusqu'à la formation d'un trou d'épingle (jusqu'à ce qu'il y ait une hausse brutale de la perméabilité à l'oxygène) avec un appareil de mesure Gelboflex.

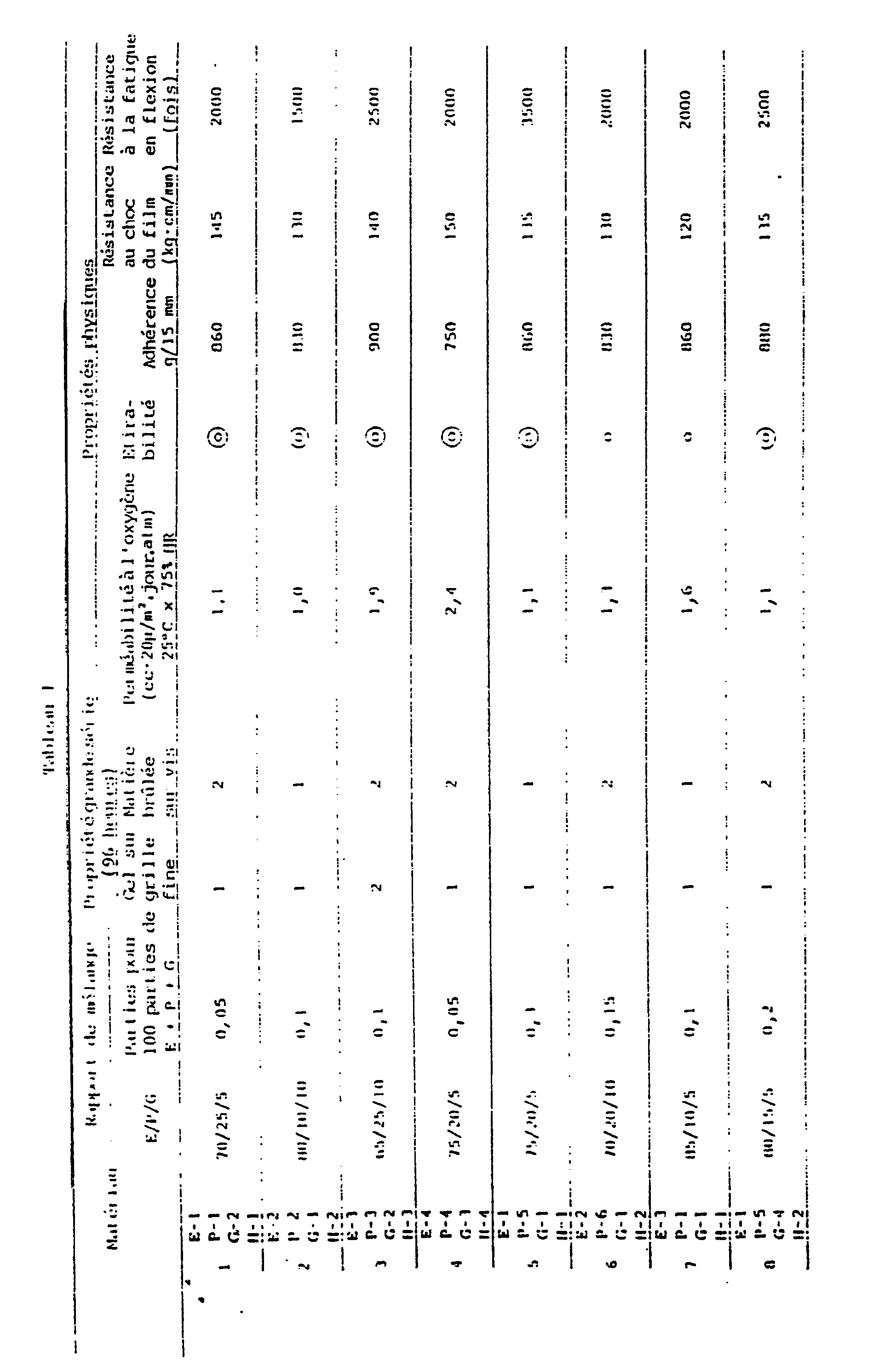

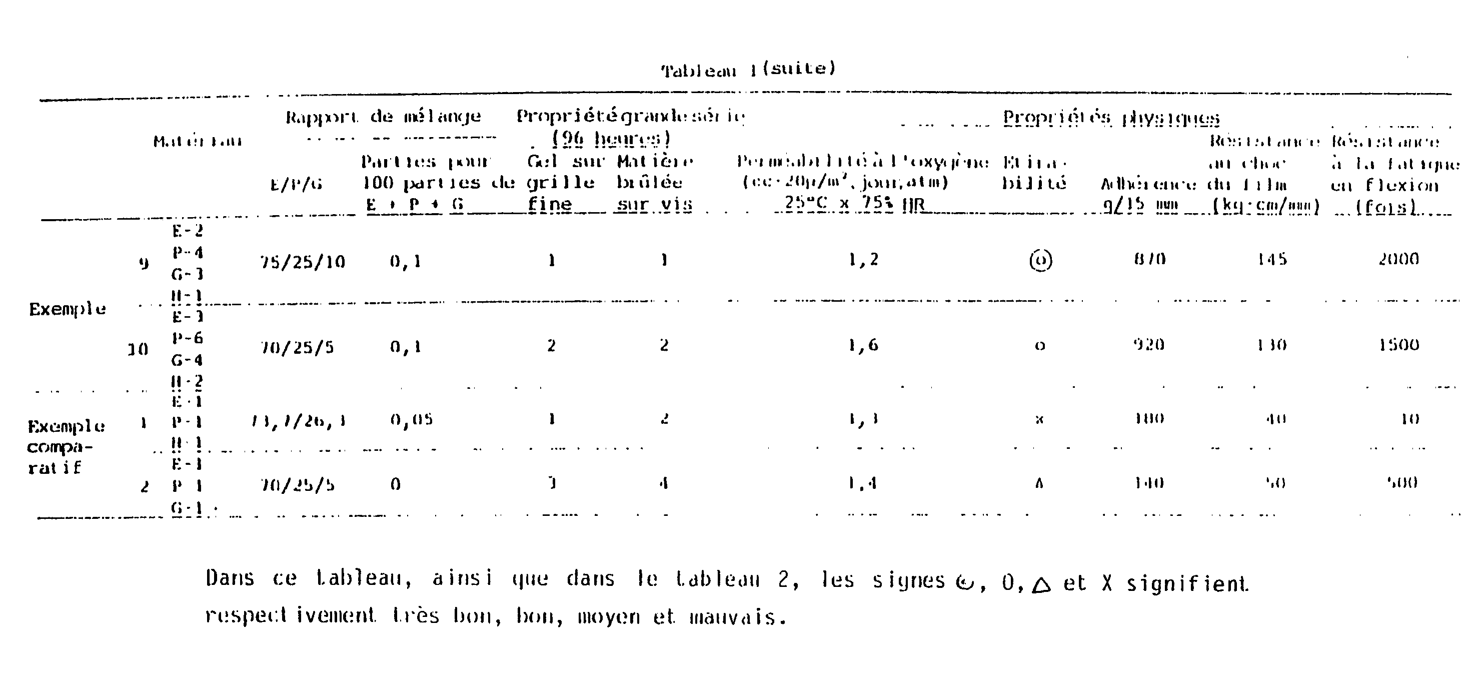

### Exemples 11 à 15

Couche intérieure (I) et couche extérieure (V) : Polyéthylène linéaire basse densité (IFC 1,5 g/10 minutes, densité 0,920)
Couches adhésives (II) et (IV) : Polyéthylène linéaire basse densité modifié par l'anhydride maléique (IFC : 2 g/10 min)
Couche intermédiaire (III) : composition selon l'invention comprenant (A), (B), (C) et (D)

Composition des couches et épaisseurs de couches (microns) : (I)/(II)/(III)/(IV)/(V) = 20/5/10/5/20.

Dans l'essai d'étirage, on utilise des épaisseurs de couches de 80/20/40/20/80.

### Extrudeuse :

Extrudeuse de diamètre 40 mm (pour les couches intérieure et extérieure)

Extrudeuse de diamètre 40 mm (pour la couche intermédiaire)

Extrudeuse de diamètre 30 mm (pour les couches adhésives)
Vis : pour chacune L/D = 28; taux de compression = 3,2

### Vitesse de rotation de la vis :

Pour les couches intérieure et extérieure : 65 tours/min

Pour la couche intermédiaire : 20 tours/min

Pour les couches adhésives : 30 tours/min

### Filière :

Filière en T avec adaptateur de combinaison de 5 couches

Largeur de la filière : 450 mm

### Température d'extrusion :

Extrudeuses pour couches intérieure, extérieure et adhésives
C₁ = 190°C C₂ = 200°C
C₃ = 210°C C₄ = 220°C

Extrudeuse pour couche intermédiaire
C₁ = 180°C C₂ = 200°C
C₃ = 220°C C₄ = 220°C

Adaptateur de combinaison 210°C

Filière en T 210°C

Les résultats sont présentés sur le tableau 2.

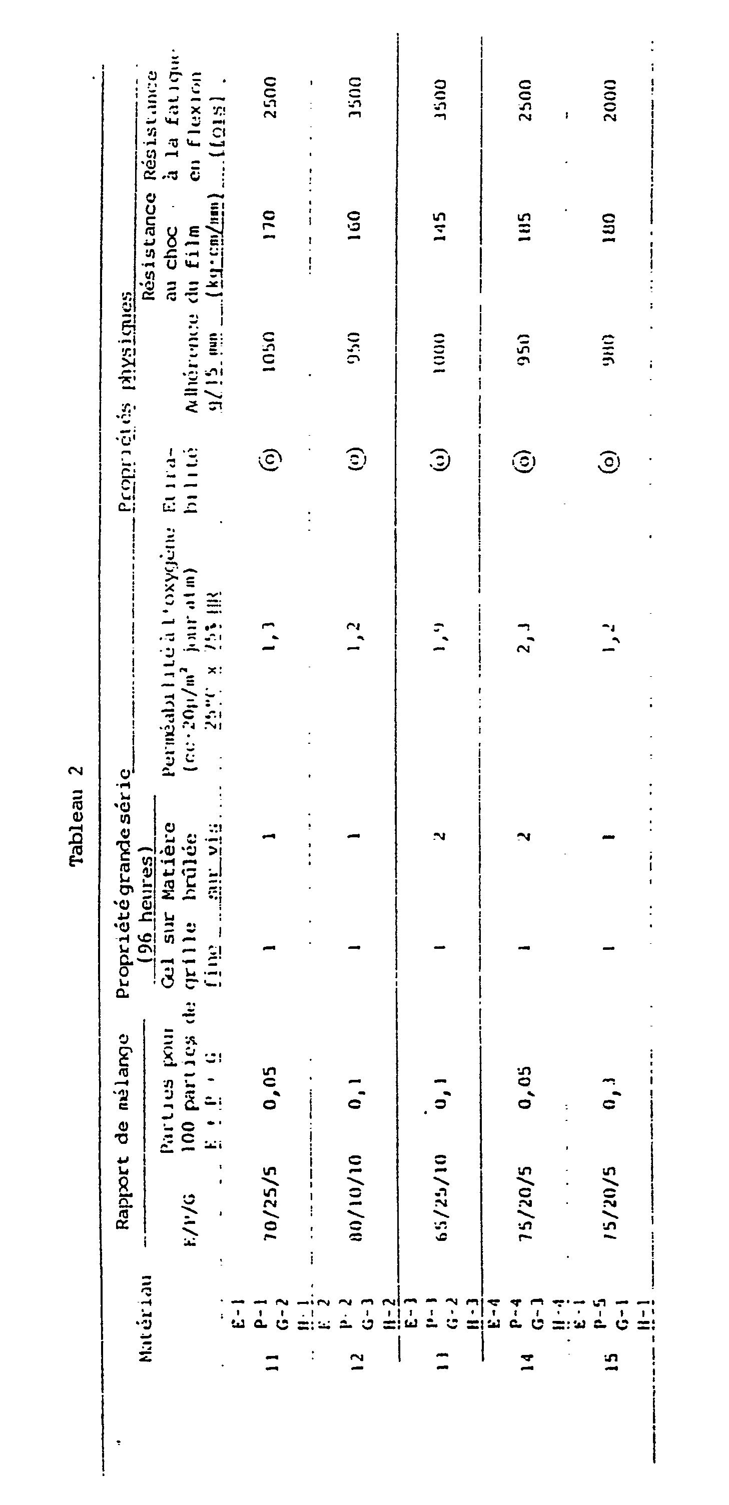

## Revendications

1. Composition de résine, qui comprend
(A) un copolymère éthylène-acétate de vinyle saponifié,
(B) une résine de polyoléfine,
(C) un polymère greffé obtenu par greffage d'un acide carboxylique à insaturation éthylénique ou d'un de ses dérivés sur une résine de polyoléfine et par réaction du composé d'addition avec un oligomère de polyamide, et
(D) une solution solide d'hydrotalcite représentée par la formule générale
${\text{[ (M²⁺ )}}_{\text{y1}} {\text{(M²⁺)}}_{\text{y2}} {\text{]}}_{\text{1-x}} {\text{M³⁺(OH)₂A}}_{\text{x/n}} \text{,mH₂O}$ dans laquelle M²⁺ représente au moins un métal choisi parmi Mg, Ca, Sr et Ba, M²⁺ est un métal choisi parmi Zn, Cd, Pb et Sn, M³⁺ est un métal trivalent, Aⁿ⁻ est un anion ayant pour valence n, et x, y1, y2 et m sont respectivement des nombres positifs satisfaisant aux conditions 0 < x ≦ 0,5, 0,5 < y1 < 1, y1 + y2 = 1, et 0 ≦ m < 2.

2. Article façonné obtenu par moulage en fusion de la composition selon la revendication 1.

3. Structure stratifiée dont moins une couche est constituée d'une composition selon la revendication 1.

4. Article façonné selon la revendication 2 ou structure stratifiée selon la revendication 3, qui est au moins orienté uniaxialement.
